Europäisches Patentamt

European Patent Office

Office européen des brevets

(11) Publication number: **0 389 018**
**A1**

## EUROPEAN PATENT APPLICATION

(21) Application number: **90200476.1**

(22) Date of filing: **28.02.90**

(51) Int. Cl.⁵ **A01G 1/04**

(30) Priority: **23.03.89 NL 8900735**

(43) Date of publication of application:
**26.09.90 Bulletin 90/39**

(84) Designated Contracting States:
**BE DE FR GB IT LU NL**

(71) Applicant: **ALCOA NEDERLAND B.V.**
**Alcoalaan 1, P.O. Box 21**
**NL-5151 RW Drunen(NL)**

(72) Inventor: **Waayer, Jozef Andreas**
**Leukerhof 49**
**NL-6004 DE Weert(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Side board for a mushroom staging.

(57) Side board for a mushroom staging, comprising an aluminium extruded section in the form of an essentially vertically positioned sheet (1), having at the top end a U-shaped part, one leg (2) of which is formed by a part of the flat sheet, and having two side arms, whereby the other leg (3) of the U-shaped part is connected by a transverse wall (7) to the essentially flat sheet, so that the above-mentioned one end is box-shaped.

fig - 1

Xerox Copy Centre

## Side board for a mushroom staging.

The invention relates to a side board for a mushroom staging, comprising an aluminium extruded section in the form of an essentially vertically positioned sheet, having at the top end a U-shaped part. one leg of which is formed by a part of the flat sheet, and having two side arms. the top side arm of which connects to the other leg of the U-shaped part and is intended for fixing to an upright of the staging, and the bottom side arm of which is intended for fixing to supporting elements with which the mushroom bed is supported.

Such an aluminium mushroom staging is known from Dutch Patent Application 7800190 of Applicants.

The above-mentioned U-shaped part is located along the top edge of each vertically positioned side board. and the parts of the two side boards serve as track rails for all kinds of machines which are movable over the mushroom beds.

Since these machines are becoming increasingly heavy and/or are causing increasing vibrations, the known side boards are no longer strong enough.

The object of the invention is to avoid this disadvantage, and this is achieved according to the invention in that the other leg of the U-shaped part is connected by a transverse wall to the essentially flat sheet. so that the above-mentioned one end is box-shaped.

In order to make the U-shaped part even stronger. the bottom of the U-shaped part is made thicker than the side board itself.

According to a further development of the invention, the side of the bottom of the U-shaped part facing the outside is provided with a wear-resistant layer.

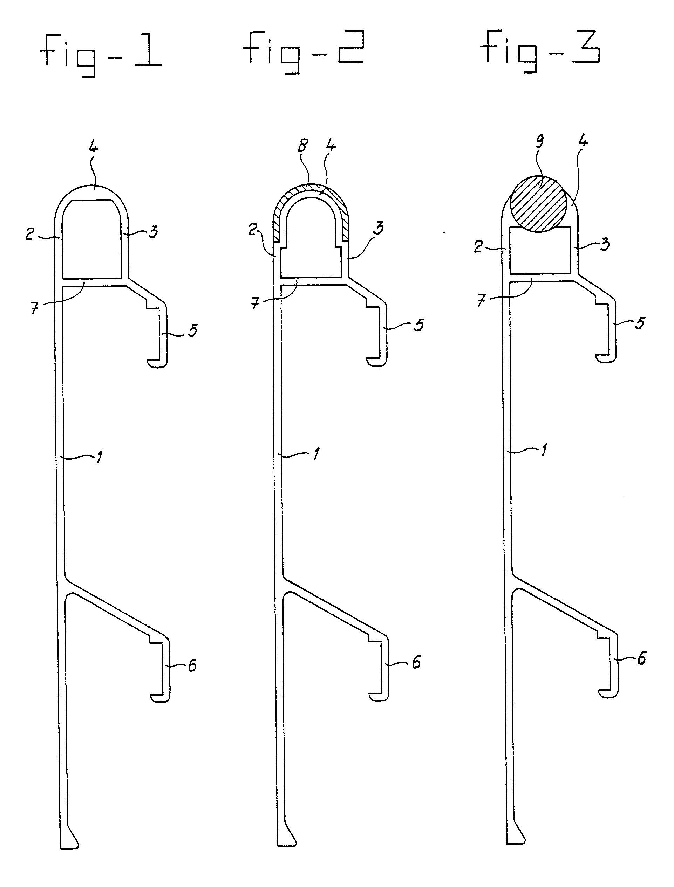

The invention will be explained in greater detail with reference to the drawing, in which Figs. 1, 2 and 3 show three embodiments.

The embodiment according to Fig. 1 comprises an essentially flat sheet 1, having on the top end a U-shaped part, of which the legs are indicated by 2 and 3, and the bottom by 4.

A side arm 5, which is intended for fixing to an upright (not shown), connects to the leg 3.

A second side arm 6 is for fixing to the supporting structure of the mushroom bed. So far all this is known from Dutch Patent Application 7800190.

Machines travel with their wheels over the bottoms 4 of two parallel side boards.

Since these machines are becoming increasingly heavy and/or are causing increasing vibrations, the known side boards are not strong enough.

According to the invention. the U-shaped part 2, 3, 4 is now reinforced by making it box-shaped , i.e. a transverse wall 7 connects the legs 2 and 3.

In order to reinforce the structure even further. the bottom 4 can be made thicker than the rest of the side board.

It will be clear that this section according to Fig. 1 can be made of extruded aluminium without any problem.

In the embodiment according to Fig. 2, a wear-resistant layer 8 is provided over the bottom 4 and a part of the legs 2 and 3 of the U-shaped part. This wear-resistant layer 8 can be, for example, stainless steel.

In order to keep the external shape of the U-shaped part even. the above-mentioned parts of the legs 2 and 3 and the bottom 4 spring inwards.

In the embodiment according to Fig. 3 the bottom 4 is made very thick and is provided with a recess in which a cord 9 of wear-resistant material is placed.

## Claims

1. Side board for a mushroom staging, comprising an aluminium extruded section in the form of an essentially vertically positioned sheet, having at the top end a U-shaped part, one leg of which is formed by a part of the flat sheet, and having two side arms. the top side arm of which connects to the other leg of the U-shaped part and is intended for fixing to an upright of the staging, and the bottom side arm of which is intended for fixing to supporting elements with which the mushroom bed is supported, characterized in that the other leg of the U-shaped part is connected by a transverse wall to the essentially flat sheet, so that the above-mentioned one end is box-shaped.

2. Side board according to Claim 1, characterized in that the bottom of the U-shaped part is made thicker than the side board itself.

3. Side board according to Claim 1 or 2, characterized in that the side of the U-shaped part facing outwards is provided with a wear-resistant layer.

# Fig-1    Fig-2    Fig-3

| Category | Citation of document with indication, where appropriate, of relevant passages | Relevant to claim | CLASSIFICATION OF THE APPLICATION (Int Cl⁵) |
|---|---|---|---|
| D,A | NL - A - 7 800 190 (ALCOA NEDERLAND B.V.) * Fig. 2 * & GB - A - 2 012 538 (ALCOA NEDERLAND B.V.) -- | 1 | A 01 G 1/04 |
| A | DE - U1 - 8 801 294 (BECKER) * Fig. 1-4; page 6, lines 3-18 * ---- | 1 | |

## DOCUMENTS CONSIDERED TO BE RELEVANT

EP 90200476.1

TECHNICAL FIELDS SEARCHED (Int Cl⁵)

A 01 G
B 65 G

The present search report has been drawn up for all claims

| Place of search | Date of completion of the search | Examiner |
|---|---|---|
| VIENNA | 29-05-1990 | FESSLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82